# EUROPEAN PATENT APPLICATION

(11) **EP 0 683 214 A2**
(43) Date of publication of application: **22.11.1995**
(21) Application number: 95106198.5
(22) Date of filing: 26.04.1995
(51) Int. Cl.: C09D 167/08, C09D 5/04

(54) **Thixotropic coating compositions**

(30) Priority: 20.05.1994 GB 9410118; 31.08.1994 GB 9417509
(71) Applicant: CRAY VALLEY LIMITED, Machen, Newport, Gwent NP1 8YN (GB)
(72) Inventor: Nightingale, Edward Peter, Machen, Gwent NP1 8PY (GB); Vivian, Simon Edward, Gwent NP6 6AX (GB); Hill, Martin Frank, Cyncoed, Cardiff CF3 7DX (GB); Rees, Steven William, Bridgend, CF31 4NJ (GB); Pezron, Erwoan, F-60200 Compiegne (FR)
(74) Representative: Dubost, Thierry

(57) **Abstract**

A thixotropic coating composition comprising and air-drying alkyd resin or modified alkyd resin as binder component, a volatile organic solvent component in which the said alkyd resin or modified alkyd resin is dissolved and present in an amount of not more than 250 grams/litre of the total composition.

Thixotropy is imparted to the composition by the presence of a polyurea material prepared by reacting one or more (poly)amines with one or more (poly)isocyanates in the presence of at least a portion of the alkyd or modified alkyd binder resin, wherein the alkyd or modified alkyd resin is derived from at least 70% by weight of long-chain fatty acid.

Application to the manufacture of thixotropic paints and varnishes.

## Description

This invention is concerned with thixotropic coating compositions in the nature of paints and varnishes and, more particularly, with such compositions suitable for manual application, e.g. by hand brushing or by roller.

Coating compositions comprising an air-drying alkyd resin dissolved in a volatile organic solvent therefor, as binder component, together with a colorant component, i.e. a pigment, are very well known. Such compositions to which are added "driers", i.e. organic solvent-soluble salts or soaps (e.g. octoates, naphthenates, linoleates etc) of various metals such as cobalt, manganese, iron lead, lithum, calcium, zirconium, zinc are also very well known and may also be used without the addition of colorants to give "clear varnishes" intended for wood protection. The use of organic solvent-soluble binder resins makes it possible to provide tough, durable, weather-proof coatings. Accordingly, despite the desire to reduce the use of volatile organic solvents in coating compositions, coatings containing such solvents are still of very considerable practical importance. It has proved possible to reduce the volatile organic solvent content of such coatings to about 250 grams/litre or less but the resultant compositions are essentially non-thixotropic. The consequence of any coating having no rheological control is that it will exhibit excessive flow. This is particularly apparent in high solids coatings which are based on low viscosity binders.

In conventional decorative solvent-borne coatings, based on alkyd resins with high inherent viscosity (e.g. from about 40 to about 800 Pa.s at 100% solids), once the solvent starts to evaporate from the applied coating there will be a rapid rise in paint viscosity, which will assist in reducing the excess flow and hence the "tear-drops" which can be evident in non-thixotropic coatings which have been brush or roller applied to vertical surfaces.

The alkyd resins used in high solids, low VOC (volatile organic content) decorative paints have inherently much lower viscosity (typically 10 Pa.s at 100% solids) than those used in conventional solvent-borne coatings. Even after solvent evaporation the paint is still relatively low in viscosity compared to a conventional system and the resistance to flow will be negligible.

There are available materials which can be incorporated into a coating to impart some degree of sag control. These materials do control the amount of sagging and it is possible to produce coatings which can be applied to vertical surfaces and which do not show the "tear-drop" effect. Unfortunately, these sag control agents are not truly thixotropic and therefore have a deleterious effect on the flow and levelling of paints, resulting in coatings which suffer from brush marks. These are not aesthetically pleasing.

Thixotropy is thus a most desirable characteristic in a coating composition intended to be applied by hand, especially for a composition to be supplied to the so-called "do-it-yourself" market.

GB-A-1454414 discloses a thixotropic composition containing a binder and, in a thixotropizing amount of from 0.05 to 10% by weight, a polyurea adduct obtained by reacting (a) a diisocyanate compound with (b) a primary and/or secondary polyamine and optionally (c) a monofunctional alcohol, oxime, amine and/or alkanolamine in the presence of at least part of the binder. In this document, the binder, which may be dissolved in non-reactive solvents, e.g. aliphatic or aromatic hydrocarbons, esters, ketones or ethers, is preferably present in the composition in an amount of at least 20% and up to about 60% by weight. Suitable binders include long-oil, middle-oil, short-oil or even oil-free alkyd resins with up to 65% by weight of long-chain fatty acid. The basic recipe disclosed in this document consists in first thoroughly mixing a binder solution, a diamine and optionally a monofunctional alcohol and then slowly adding a diisocyanate to that mixture.

Several disadvantages result from using the aforesaid recipe in the thixotropic compositions of GB-A-1454414. A first disadvantage is that it does not readily allow to achieve a satisfactory level of thixotropy, as indicated by many examples of the document itself. A second disadvantage is that the polyurea adduct thus prepared imparts undesirable optical properties to the coating composition, namely a hazy appearance probably due to the presence of clusters of excessive sizes resulting from an inappropriate choice of the order of addition of the ingredients and/or from uncontrolled reaction conditions.

It is important to note that mixing a binder such as long-oil alkyd resin with an adduct obtained by reacting (a) a diisocyanate compound with (b) a primary and/or secondary polyamine and optionally (c) a monofunctional alcohol will necessarily result in competing chemical reactions (essentially a competition between amine groups and hydroxyl groups for isocyanate consumption) finally resulting in the formation of compounds having urea groups, biuret groups, urethane groups and allophanate groups. It is thus believed that the respective proportions of such groups in the final composition are of primary influence on the level of thixotropy and/or on the optical properties of the said coating composition.

When the binder component of the coating composition is an air-drying alkyd resin and especially when it is derived from a very high proportion of a long-chain fatty acid, two parameters have surprisingly been found of importance for readily and simultaneously achieving a high level of thixotropy and of optical properties of the resulting coating composition :
- the weight average molecular weight of the alkyd resin, and
- the acid value of the alkyd resin.

More specifically it was discovered that a too low weight average molecular weight would result in insufficient thixotropy. Similarly, the gel forms too rapidly when the acid value of the resin is unduly low, otherwise it forms too slowly when the acid value of the resin is too high.

A benefit of effecting rheological modification in accordance with the above principles is that high solids coatings can be produced, having true thixotropic properties. When applied by brush, to vertical surfaces in particular, these coatings will have good sag resistance properties combined with good flow and levelling characteristics.

The application of high solids decorative paint will inevitably lead to thicker final films being deposited on the substrate, even after solvent evaporation. Ticker films will have an increasing tendancy to flow and there will therefore be a greater need to impart rheological control to this particular type of coating. The rheological modification described herein is beneficial in providing a means of applying thicker films with a good balance of flow, levelling and sag control.

It is indeed an object of the present invention to provide, in a one coat application, the same film thicknesses and film appearance and performance that until now has only been achievable by multi coat applications of conventional solids coatings. By incorporating the rheological modification to the alkyds described herein it is possible to apply, in a single application, truly thick films (e.g. 150 µm dry film thickness) which have the same drying characteristics as conventional coatings applied at 50µm dry film thickness without observing any loss in film appearance.

A further benefit of applying thick films is the reduction in the time required for painting, thereby reducing labour costs, increasing leisure time and reducing the re-occupancy time of the room being painted.

It has now been found, in accordance with the present invention, that it is possible to provide an alkyd resin-based coating composition having a relatively low volatile organic solvent content and which, at the same time, has truly thixotropic properties, by incorporating in the composition a specific polyurea material as thixotropy-imparting component, preferably together with the use of particular long-oil alkyd resins or modified long-oil alkyd resins.

According to the invention, therefore, there is provided a thixotropic coating composition comprising an air-drying alkyd resin or modified alkyd resin as binder component, a volatile organic solvent component in which the said alkyd resin or modified alkyd resin is dissolved and present in an amount of not more than 250 grams/litre of the total composition, and optionally, a colorant component comprising one or more pigments, thixotropy being imparted to the composition by the presence of a polyurea material prepared by reacting one or more (poly)amines with one or more (poly)isocyanates in the presence of at least a portion of the alkyd or modified alkyd binder resin, wherein the alkyd or modified alkyd resin is derived from at least 70% by weight of long-chain fatty acid.

The binder resin used in the coating composition of the invention comprises a long-oil air-drying alkyd or modified alkyd resin which should preferably be derived from 70 to 95% by weight, of long chain fatty acid. Suitable fatty acids include unsaturated C₁₂-C₂₂ carboxylic acids such as oleic, ricinoleic, linoleic, linolenic and eleostearic acids, typically used in the form of mixtures of fatty acids derived from natural, biological or synthetic oils such as linseed oil, sunflower oil, oiticica oil, tung oil, safflower oil, cottonseed oil, soya bean oil, tall oil fatty acid, dehydrated castor oil, fish oil, coconut oil or conjugated fatty acids. The fatty acid mixtures may be used in the form of their naturally occurring triglycerides.

A suitable soya oil, for example, contains about 25% oleic, 51% linoleic and 9% linolenic acids, the remaining 15% soya fatty acids being saturated. A suitable tall oil comprises about 46% oleic, 41% linoleic, and 3% linolenic acids, the remaining 8% tall oil fatty acids being saturated.

In addition to the long-chain fatty acid, the alkyd resin will also be derived from other usual components, namely (a) one or more polyhydric alcohols, such as glycerol, pentaerythritol, trimethylol propane, neopentyl glycol, ethylene glycol, diethylene glycol, di-trimethylolpropane, 1,6-hexane diol, 2-methyl-1,3 propanediol, triethylene glycol, dipentaerythritol, propylene glycol, 1,4-and 1,3-butane diols, and (b) one or more polycarboxylic acids such as phthalic acid, isophthalic acid, trimellitic acid, pyromellitic acid, adipic acid, maleic acid, fumaric acid, benzoic acid, p-tertiary butyl benzoic acid, abietic acid, terephthalic acid, tetrahydrophthalic anhydride, succinic acid, sebacic acid, methylsuccinic acid, glutaric acid, azelaic acid, pimelic acid and dimerized fatty acids. Other modifying components which may be used in the manufacture of long-oil alkyd resins include namely rosin esters, phenolic resins, maleic-rosin condensates, polyisocyanates and vinyl monomers such as styrene, vinyl toluene, and alkyl (meth)acrylates.

Alkyd resins and their modified derivatives are described, for example, in "The Chemistry of Organic Film Formers", D.H. Solomon, Robert E. Kreiger Publishing Company, 2nd Edition, 1977, e.g. at pages 75-124. For convenience, in the following description, reference will be made only to "alkyd resins" which term is intended to refer to both modified and unmodified alkyd resins.

The alkyd resin may be prepared by the usual processes namely a solvent process or a dry fusion process. In the well established solvent process, the components of the alkyd are reacted in the presence of a water-immiscible solvent which forms an azeotropic mixture with the water of reaction from the polycondensation process. The water is separated and the solvent returns to the reactor. Typically, the amount of the azeotropic solvent added to the reaction mass will be from about 3% to 10% of the total mass in the reaction vessel. Commonly used solvents are xylene, toluene and, higher boiling aromatic solvents including mixtures of alkyl benzenes. The reaction is carried out at elevated temperatures, e.g. from about 200 to 270°C. Alkyd resins manufactured by this process may then be further modified with isocyanates or vinyl monomers as described above. The process solvent may optionally be removed, either before or after further modification, in this instance coatings with an aromatic solvent content of less than 1% by weight of the total coating solution may be produced.

The alkyd resin may also be prepared by a dry fusion process, i.e. by reacting the various components at elevated temperatures, e.g. from about 200 to 270°C, in the absence of added solvent.

In accordance with a preferred feature of the invention, the alkyd resin may be prepared in two stages, either a first stage comprising polycondensing the long-chain fatty acid and a portion of the polycarboxylic acid with a stoichiometric excess of polyhydric alcohol and then reacting the resultant product with further polycarboxylic acid (which may be the same as or different from that used in the first stage); or a first stage comprising polycondensing a portion of the long-chain fatty acid and the polycarboxylic acid with a stoichiometric excess of polyhydric alcohol and then reacting the resultant product with further long-chain fatty acid (which may be the same as or different from that used in the first stage).

The air-drying alkyd resin thus produced may be optionally diluted with diluents in order to reduce its viscosity. Commonly used diluents include aliphatic hydrocarbons comprising mixtures of normal paraffins, isoparaffins and cycloparaffins and in some cases aromatic hydrocarbons, e.g. white spirits, dearomatised white spirits and higher flash point white spirits. These diluents are non-reactive volatile organic compounds. By the term "volatile organic solvent" as used herein we mean solvents having a boiling point of less than 280°C. Other diluents may be used which are reactive and will take part in the autoxidative drying process of the final coating. Such diluents include fatty acid esters of polyhydric alcohols such as already disclosed herein above.

A particularly preferred class of reactive diluents comprises the (meth)acrylates of polyhydric alcohols and examples of these include trimethylol propane triacrylate trimethylpropane trimethacrylate, tripropylene glycol diacrylate, triethylene glycol diacrylate, and ethoxylated trimethylolpropane triacrylate. Such preferred reactive diluents have been found to improve the drying characteristics of the thixotropic coating compositions of the invention. They are suitably used in amounts of from about 2 to 25% by weight, preferably about 5 to 15% by weight, based on the total weight of resin binder in the composition.

Whatever the process used for the preparation of the specific alkyd resin, it is of utmost importance, in order to achieve the best possible thixotropic effect in the coating composition of the invention, that two structural parameters of the alkyd resin be severely controlled within rather narrow ranges :
- the acid value of the alkyd resin should preferably be selected between about 3 and about 10 mg KOH/g, more preferably between about 5 and about 8 mg KOH/g.
- the weight average molecular weight of the alkyd resin, as conventionally measured by gel permeation chromatography in tetrahydofuranne should preferably be at least about 120.000, more preferably at least about 180.000. In view of the well known relationship between weight average molecular weight and viscosity, another way to assess a suitable weight average molecular weight is to control the final viscosity of the alkyd resin at a shear rate of 2500 s⁻¹ and a 100% solids within a range from about 0.1 to about 5 Pa.s.

The alkyd binder is preferably present in the thixotropic coating composition of the invention in a proportion of from about 70 to about 98% by weight of the composition.

Thixotropy is imparted to the coating compositions of the invention by the presence of a polyurea material derived from the reaction of one or more (poly)amines with one or more (poly)isocyanates in the presence of at least a portion of the alkyd binder resin. It is generally preferred that this polyurea material be a polyurea adduct obtained by reacting (a) a diisocyanate with (b) a primary and/or a secondary polyamine and with (c) a monofunctional alcohol. More preferably, in order to achieve the best possible thixotropic effect in the coating composition of the invention, it was surprisingly found that the said polyurea adduct should comprise not more than 35% urethane and/or allophanate functions, preferably between about 5% and 35% of the said functions. The proportion of these functions with respect to the overall compositions of the polyurea adduct may be easily determined by nuclear magnetic resonance of C¹³ with a precision of about 5%. That is, coating compositions comprising a polyurea adduct with more than 35%, and in some cases up to 60%, of urethane and/or allophanate functions have proved to exhibit an unsufficient and/or instable level of thixotropy in order to be truly suitable for most decorative paints and varnishes.

In order to ensure that this preferred characteristic of the polyurea adduct is met, two parameters appear to be important, either alone or in combination, for the manufacturing process of the addduct. First it is preferred that an isocyanate adduct be manufactured separately by reacting the diisocyanate (a) with the monofunctional alcohol (c), and then the said isocyanate adduct is poured into a homogeneous mixture of a portion of the alkyd binder resin and of the polyamine (b). Secondly it is preferred, in order to minimize allophanate formation, that the temperature during the homogeneous mixing of binder resin and polyamine be kept below 40°C, preferably within a range from 15°C to 30°C, and that the temperature during pouring of the isocyanate adduct into the alkyd/polyamine mixture be also kept by appropriate controlling means below 40°C, preferably within a range from 15°C to 30°C.

During the manufacture of the isocyanate adduct, it is preferred to use a molar ratio of the diisocyanate (a) to the monofunctional alcohol (c) between about 0.8 and about 1.1. A variety of polyamines (b) may be used but those preferred include neopentane diamine, 2-methyl-1,5-pentamethylene diamine, 2-butyl-2-ethyl-1,5-pentane-diamine, ethylene diamine, isophorone diamine, meta-xylene diamine, hexamethylene diamine, 4,4-diaminocyclohexyl methane and N-benzyl dimethylamine. Instead of the isocyanate adduct hereinabove referred a variety of monofunctional isocyanates may be used such as alkyl isocyanates with 1 to 22 carbon atoms, for example methyl isocyanate, ethyl isocyanate, propyl isocyanate, butyl isocyanate, stearyl isocyanate, and/or aromatic isocyanates such as phenyl isocyanate or cycloaliphatic isocyanates such as cyclohexyl isocyanate. Monofunctional alcohols (c) which may be used in the preparation of the polyurea adduct include aliphatic monoalcohols with 1 to about 16 carbon atoms such as n-butanol, 2-butanol, heptanol, 2-ethylhexanol, tridecanol and cycloaliphatic alcohols like cyclohexanol.

The polyurea adduct is suitably prepared in the presence of from about 10 to 100% by weight of the total alkyd resin to be used in the composition, the remainder of the alkyd resin (if any) being added after the reaction of polyamines and polyisocyanates. The stoichiometric ratio of the amine to isocyanate is suitably from about 0.7 to about 1.3, preferably from about 0.8 to about 1.1. The total amount of amine and isocyanate reacted together, to form the polyurea material, is suitably from about 0.05 to about 15% by weight, preferably 0.1 to 10% by weight of the total solid alkyd resin present in the final coating composition.

Suitable solvents for use in the compositions of the invention include aliphatic hydrocarbons comprising mixtures of normal paraffins, isoparaffins and cycloparaffins and in some cases aromatic hydrocarbons, e.g. white spirits, dearomatised white spirits, higher flash point white spirits. The solvent is present at such an amount as to keep the volatile organic compound content below about 250 g per litre, preferably below about 210 g/litre, of the total coating. In this connection, it should be noted that coating compositions in accordance with the invention are formulated so as to require no further thinning on use, and to be able to be applied to the desired substrate directly from the can or other container using an appropriate brush. Such compositions may conveniently be termed ready-to-use compositions. As will be appreciated, since no additional solvent is required to thin or dilute the composition, the overall use of volatile organic solvents is markedly reduced as compared with more conventional compositions.

The optional colorant component of the composition of the invention comprises one or more pigments such as any of the well known inorganic and organic pigment chemical types such as titanium dioxide, antimony oxide, calcium carbonates, barium sulphates calcite, china clay, iron oxides, chromates, ferrocyanides carbon black, azo pigments, phthalocyanines, anthraquinones, and the like.

Pigments are preferably used in amounts of from about 0.1 to about 400% by weight, based on the weight of alkyd resin binder.

In addition to the above components, air-drying compositions in accordance with the invention may contain one or more so-called "driers", i.e. organic solvent-soluble salts or soaps (such as octoates, naphthenates or linoleates) of various metals like cobalt, manganese, iron, lead, calcium, zinc, lithium, strontium and zirconium. Primary driers, such as cobalt or manganese salts, are preferably used in amounts of from about 0.01 to about 0.3% by weight of metal and secondary driers (such as calcium, barium, zirconium, lithium, zinc and strontium salts) are preferably used in amounts of from about 0.01 to about 2.0% by weight of metal, based on the weight of solid alkyd resin binder.

Further components which may be present in compositions in paints according to the invention include antiskinning agents such as methyl ethyl ketoxime, cyclohexanone ketoxime, biocides and silicone oils.

The overall thixotropy of the coating composition may be improved by the addition, after incorporation of the remaining ingredients, of a polar or organic solvent such as n-propanol, isopropanol, methoxy acetoxy propane, n-butanol, tridecanol, propylene glycol, dipropylene glycol or propylene glycol monomethyl ether, or of modified alkyd resin containing such a polar grouping, e.g. a polyether glycol modified long-oil alkyd. Such additives need be present only in small amounts, e.g. from about 0.1 to about 5% by weight of the alkyd resin solids in the case of the polar solvents.

The following examples are given by way of illustration only. Unless stated otherwise, all amounts are expressed by weight.

### EXAMPLE 1 - ALKYD A

| 1st STAGE COMPONENTS | |
|---|---|
| Sunflower fatty acid | 5573.62 gm |
| Pentaerythritol | 1388.94 gm |
| Phthalic anhydride | 538.04 gm |

| 2nd STAGE COMPONENT | |
|---|---|
| Trimellitic anhydride | 499.42 gm |

The 1st stage components were charged to a 10 litre flask equipped with stirrer, nitrogen inlet, thermometer and a side arm open to the atmosphere to allow removal of distillate from the reaction. The ingredients were heated, with stirring to 250°C. Removal of the water of reaction was aided by passing nitrogen through the reaction mass. The temperature was held at 250°C for 7 hours, at which time the acid value was 5.8 mg KOH/g. The reaction mass was cooled to 200°C and trimellitic anhydride was then added. The temperature was raised to 250°C and the condensation process was continued under fusion process conditions at 250°C for 10 hours. The batch was cooled and diluted with a dearomatised white spirit marketed under the tradename Spirdane SPKD40 by Total Solvant. The final characteristics of the resin were :

| | |
|---|---|
| Solids content | 91.1% |
| Acid value | 3.9 mg KOH/g |
| Viscosity at 2500 s⁻¹ | 1.47 Pa.s |

### EXAMPLE 2 - ALKYD B

| 1st STAGE COMPONENTS | |
|---|---|
| Sunflower fatty acid | 2764.0 gm |
| Pentaerythritol | 480.8 gm |
| Isophthalic acid | 59.7 gm |

| 2nd STAGE COMPONENTS | |
|---|---|
| Trimellitic anhydride | 195.5 gm |
| Triphenyl phosphite | 0.57 gm |

The 1st stage components were charged to a 5 litre flask equipped with stirrer, nitrogen inlet, thermometer and a side arm open to the atmosphere to allow removal of distillate from the reaction. The ingredients were heated, with stirring to 250°C. Removal of the water of reaction was aided by passing nitrogen through the reaction mass. The temperature was held at 250°C for 3.5 hours, at which time the acid value was 5.0 mg KOH/g and the viscosity (at 2500 s⁻¹) was 0.11 Pa.s. The reaction mass was cooled to 200°C and the 2nd stage components were added. The temperature was increased to 250°C and the condensation process was continued under fusion process conditions at 250°C for 51.2 hours, at which time the batch was cooled and discharged. No solvent was added. The final characteristics of the alkyd resin were :

| | |
|---|---|
| Acid value | 6.8 mg KOH/g |
| Viscosity (at 2500 s⁻¹) | 0.66 Pa.s |
| Solids content | 100% |

### EXAMPLE 3 - REACTIVE DILUENT A

| | |
|---|---|
| Sunflower fatty acid | 3623.34 gm |
| Di-pentaerythritol | 576.66 gm |

The two components were charged to a 5 litre flask equipped with stirrer, nitrogen inlet, thermometer and a side arm to the atmosphere to allow removal of distillate from the reaction. The ingredients were heated, with stirring to 250°C. Removal of the water of reaction was aided by passing nitrogen through the reaction mass. The temperature was held at 250°C for 3.5 hours and the batch was then cooled and discharged. The final characteristics of this material were :

| | |
|---|---|
| Acid value | 9.9 mg KOH/g |
| Viscosity (at 2500 s⁻¹) | 0.14 Pa.s |

### EXAMPLE 4 - ALKYD C

Alkyd C was made by mixing at 20°C, 650 parts Alkyd B and 350 parts of Reactive Diluent A. Final characteristics were :

| | |
|---|---|
| Acid value | 7.9 mg KOH/g |
| Viscosity (at 2500 s⁻¹) | 0.42 Pa.s |
| Solids content | 100% |

### EXAMPLE 5 - ALKYD D

| 1st STAGE COMPONENTS | |
|---|---|
| Soya bean oil | 2074.80 gm |
| Pentaerythritol | 404.40 gm |
| Calcium manosec | 0.84 gm |

| 2nd STAGE COMPONENTS | |
|---|---|
| Triphenyl phosphite | 1.60 gm |
| Phthalic anhydride | 740.80 gm |
| Xylene | 96.40 gm |

| 3rd STAGE COMPONENT | |
|---|---|
| Shellsol D40 | 682.00 gm |

The 1st stage components were charged to a 5 litre flask equipped with a stirrer, a nitrogen inlet, a thermometer and a Dean & Stark condenser system to allow azeotropic distillation of water. The temperature was raised to 250°C and held at this temperature for 1.5 hours, after which time 1 part of the resulting alcoholysis product gave a clear solution at 25°C when diluted with 3 parts of methanol. The batch was cooled to 200°C and the 2nd stage components were then added. The temperature was raised to 260°C and the condensation process was run under azeotropic distillation. The temperature was held at 260°C for 5 hours. 504.7 parts of this resin were blended with 210 parts of reactive diluent A and 63 parts of Shellsol D40.

The final characteristics of this resin were :

| | |
|---|---|
| Solids content | 89.8% |
| Viscosity (at 2500 s⁻¹) | 1.76 Pa.s |

### EXAMPLE 6 - ALKYD E

| 1st STAGE COMPONENTS | |
|---|---|
| Soya bean oil | 2074.80 gm |
| Pentaerythritol | 404.40 gm |
| Calcium manosec | 0.84 gm |

| 2nd STAGE COMPONENTS | |
|---|---|
| Triphenyl phosphite | 1.60 gm |
| Phthalic anhydride | 740.80 gm |
| Xylene | 96.40 gm |

| 3rd STAGE COMPONENT | |
|---|---|
| Shellsol D40 | 682.00 gm |

The 1st stage components were charged to a 5 litre flask equipped with a stirrer, a nitrogen inlet, a thermometer and a Dean & Stark condenser system to allow azeotropic distillation of water. The temperature was raised to 250°C and held at this temperature for 1.5 hour, after which time 1 part of the resulting alcoholysis product gave a clear solution at 25°C when diluted with 3 parts of methanol. The batch was cooled to 200°C and the 2nd stage components were then added. The temperature was raised to 260°C and the condensation process was run under azeotropic distillation. The temperature was held at 260°C for 5 hours. 541 parts of this resin were blended with 175 parts of reactive diluent A and 63 parts of Shellsol D40.

The final characteristics of this resin were :

| | |
|---|---|
| Solids content | 89.8% |
| Viscosity (at 2500 s⁻¹) | 2.6 Pa.s |

### EXAMPLE 7 - THIXOTROPIC ALKYD A

| | |
|---|---|
| Alkyd C | 4819.28 gm |
| Xylylene diamine | 24.10 gm |
| Tridecanol/ toluenediisocyanate (TDI) adduct | 156.62 gm |

TDI was commercially available as a 65:35 mixture of its 2,4 and 2,6 isomers.

Alkyd C was charged to a reaction vessel. The temperature was adjusted to 19°C. Xylylene diamine was added and stirred for 30 minutes. After this time, the isocyanate adduct was added and stirred for 2.5 hours before discharge. 24 hours after discharge, the product had developed a very high degree of thixotropy. Its viscosity was 0.77 Pa.s at 2500 sec⁻¹.

### EXAMPLE 8 - THIXOTROPIC ALKYD B

| | |
|---|---|
| Alkyd A | 1500.00 gm |
| Spirdane SPKD40 | 135.69 gm |
| Alkyd B | 136.05 gm |
| Xylylene diamine | 8.98 gm |
| Tridecanol / TDI adduct | 53.88 gm |

The alkyd A, Spirdane SPKD40 and Alkyd B were charged to a 2 litre reaction vessel and stirred. The temperature was adjusted to 25°C. Xylylene diamine was added and 30 minutes later the isocyanate adduct was added. Stirring was continued for 30 minutes, after which time the material was discharged from the reaction vessel. 24 hours after manufacture the characteristics of this composition were :

| | |
|---|---|
| Solids content | 84.7% |
| Viscosity (at 2500 s⁻¹) | 0.9 Pa.s |

### EXAMPLE 9 - ALKYD F

| | |
|---|---|
| Tall oil fatty acid | 1778.0 gm |
| Phthalic anhydride | 571.60 gm |
| Pentaerythritol | 505.60 gm |
| Xylene | 97.20 gm |

All ingredients were charged to a 5 litre flask equipped with a stirrer, a nitrogen inlet, a thermometer and a Dean & Stark condenser system to allow azeotropic distillation of water. The temperature was raised to 250°C. The batch was held under solvent process conditions at this temperature for 10 hours at which time the acid value was 16 mg KOH/g. The process solvent was removed at 250°C by vacuum distillation and the process conditions at 250°C for a further 5 hours at which time the acid value was 4.3 mg KOH/g, and the viscosity of a 60% solution in white spirit was 0.23 Pa.s at 2500 s⁻¹. 750 parts of this resin (at 97% solids) was blended with 250 parts of Reactive Diluent A and 86 parts of Spirdane SPKD40 to give a resin with the following characteristics :

| | |
|---|---|
| Solids content | 89.8% |
| Viscosity (at 2500 s⁻¹) | 1.76 Pa.s |
| Acid value | 6.7 mg KOH/g |

The following examples illustrate the manufacture of paints and woodstains from the above components. Paints were produced by the following general process :
1. Disperse the titanium dioxide in about 20 g of the alkyd resin using a high speed disperser.
2. Add the thixotropic alkyd (herein after "Thixalkyd") and disperse.
3. Add the remaining alkyd, driers and methyl ethyl ketoxime and disperse.
4. Add the Dowanol PM (methoxy acetoxy propane marketed by DOW CHEMICAL) using minimal stirring.
5. Thin to desired viscosity.
The woodstain was produced by the following general process.
1. Disperse the thixotropic alkyd in the alkyd using a high speed disperser.
2. Add the Sicoflush pigment and high speed disperse.
3. Disperse the Crayvallac 62 in 4.6 g Shellsol D40 until a "paste" is formed, add the dispersion to the resins.
4. Dissolve the paraffin wax in 5 g Shellsol D40 and add to the woodstain.
5. Stir in the Preventol A4S and the TS 100 under minimal stirring.
6. Add the driers and methyl ethyl ketoxime and disperse.
7. Incorporate the Dowanol PM under minimal stirring.
8. Thin to desired viscosity with Shellsol D40.

### EXAMPLE 10

### Thixalkyd B based White Gloss Paint

| Composition (% by weight) | |
|---|---|
| Thixalkyd B | 55.50 |
| Titanium Dioxide | 35.39 |
| 12% Cobalt Drier (Cobalt Octoate, ex. Rhone Poulenc) | 0.20 |
| 10% Calcium Drier (Calcium Manosec, ex. Rhone Poulenc) | 0.94 |
| 24% Zirconium Drier (Zirconium Manosec ex. Rhone Poulenc) | 0.30 |
| Dowanol PM | 2.36 |
| Methyl Ethyl Ketoxime | 0.24 |
| Shellsol D40 | 5.07 |

| Properties | |
|---|---|
| ICI Gel Strength (4X2 paddle) | 105 |
| Viscosity | 0.4 Pa.s |
| Pigment binder ratio | 0.71:1 |
| SG | 1.31 |
| Vehicle Solids | 78.4% |
| Total Solids | 86.2% |
| Pigment volume concentration | 15.1% |
| Total Volume Solids | 75.7% |
| VOC | 181 g/l |

### EXAMPLE 11

### Alkyd D : Thixalkyd A (70:30). White Gloss Paint

| Composition (% by weight) | |
|---|---|
| Alkyd D | 37.88 |
| Thixalkyd A | 14.58 |
| Titanium Dioxide | 36.45 |
| 12% Cobalt Drier (Cobalt Octoate, ex. Rhone Poulenc) | 0.20 |
| 10% Calcium Drier (Calcium Manosec, ex. Rhone Poulenc) | 0.97 |
| 24% Zirconium Drier (Zirconium Manosec ex. Rhone Poulenc) | 0.36 |
| Dowanol PM | 2.43 |
| Methyl Ethyl Ketoxime | 0.24 |
| Shellsol D40 | 6.95 |

| Properties | |
|---|---|
| ICI Gel Strength (4X2 paddle) | 70 |
| Viscosity | 0.4 Pa.s |
| Pigment binder ratio | 0.75:1 |
| SG | 1.31 |
| Vehicle Solids | 77.7% |
| Total Solids | 86.0% |
| Pigment volume concentration | 15.9% |
| Total Volume Solids | 74.4% |
| VOC | 183.6 g/l |

### EXAMPLE 12

### Alkyd E : Thixalkyd A (70:30), White Gloss Paint

| Composition (% by weight) | |
|---|---|
| Alkyd E | 37.47 |
| Thixalkyd A | 14.39 |
| Titanium Dioxide | 35.97 |
| 12% Cobalt Drier (Cobalt Octoate, ex. Rhone Poulenc) | 0.20 |
| 10% Calcium Drier (Calcium Manosec, ex. Rhone Poulenc) | 0.96 |
| 24% Zirconium Drier (Zirconium Manosec ex. Rhone Poulenc) | 0.30 |
| Dowanol PM | 2.40 |
| Methyl Ethyl Ketoxime | 0.24 |
| Shellsol D40 | 8.07 |

| Properties | |
|---|---|
| ICI Gel Strength (4X2 paddle) | 80 |
| Viscosity | 0.4 Pa.s |
| Pigment binder ratio | 0.75:1 |
| SG | 1.30 |
| Vehicle Solids | 76.2% |
| Total Solids | 85.0% |
| Pigment volume concentration | 15.8% |
| Total Volume Solids | 72.9% |
| VOC | 195.4 g/l |

### EXAMPLE 13

### Alkyd F : Thixalkyd A (70:30), White Gloss Paint

| Composition (% by weight) | |
|---|---|
| Alkyd E | 37.17 |
| Thixalkyd A | 14.34 |
| Titanium Dioxide | 35.85 |
| 12% Cobalt Drier (Cobalt Octoate, ex. Rhone Poulenc) | 0.20 |
| 10% Calcium Drier (Calcium Manosec, ex. Rhone Poulenc) | 0.96 |
| 24% Zirconium Drier (Zirconium Manosec ex. Rhone Poulenc) | 0.30 |
| Dowanol PM | 2.39 |
| Methyl Ethyl Ketoxime | 0.24 |
| Shellsol D40 | 8.55 |

| Properties | |
|---|---|
| ICI Gel Strength (4X2 paddle) | 50 |
| Viscosity | 0.4 Pa.s |
| Pigment binder ratio | 0.75:1 |
| SG | 1.30 |
| Vehicle Solids | 75.5% |
| Total Solids | 84.5% |
| Pigment volume concentration | 15.9% |
| Total Volume Solids | 72.2% |
| VOC | 200.4 g/l |

### EXAMPLE 14

### Alkyd C : Thixalkyd A (70:30), Woodstain

| Composition (% by weight) | |
|---|---|
| Alkyd C | 35.88 |
| Thixalkyd A | 21.88 |
| Sicoflush Red 2817 C4 | 12.48 |
| 12% Cobalt Drier (Cobalt Octoate, ex. Rhone Poulenc) | 0.24 |
| 10% Calcium Drier (Calcium Manosec, ex. Rhone Poulenc) | 1.16 |
| 24% Zirconium Drier (Zirconium Manosec ex. Rhone Poulenc) | 0.30 |
| Paraffin Wax | 0.26 |
| Crayvallac 62 | 2.31 |
| Preventol A4S | 1.16 |
| TS 100 | 2.89 |
| Dowanol PM | 2.89 |
| Methyl Ethyl Ketoxime | 0.30 |
| Shellsol D40 | 18.19 |

| Properties | |
|---|---|
| ICI Gel Strength (4X2 paddle) | 30 |
| Viscosity | 0.1 Pa.s |
| Total Solids | 72.9% |
| VOC | 241.8 g/l |

### EXAMPLE 15 - ALKYD G

| 1st STAGE COMPONENTS | |
|---|---|
| Sunflower fatty acid | 3148 |
| Pentaerythritol | 626 |
| Isophthalic acid | 253 |

| 2nd STAGE COMPONENT | |
|---|---|
| Trimellitic anhydride | 173 |

The 1st stage components were charged to a 5 litre flask equipped with stirrer, nitrogen inlet, thermometer and a side arm open to the atmosphere to allow removal of distillate from the reaction. The ingredients were heated, with stirring to 250°C. Removal of the water of reaction was aided by passing nitrogen through the reaction mass. The temperature was held at 260°C for 5 hours, at which time the acid value was 8.2 mg KOH/g. The reaction mass was cooled to 200°C and the 2nd stage component was added. The temperature was increased to 260°C and the condensation process was continued under fusion process conditions at 260°C for 10 hours, at which time the acid value was 6.0 mg KOH/g and viscosity was 1.44 Pa.s. The product was diluted to 90% solids in Spirdane SPK D40. The resulting resin solution was then mixed, at room temperature, with trimethylol propane trimethacrylate in the ratio 95 parts of alkyd solution and 5 parts of trimethylol propane trimethacrylate. The resulting product was characterised by 89.5% solid contents and a viscosity of 0.65 Pa.s at 25°C.

### EXAMPLE 16 - THIXOTROPIC ALKYD C

| | |
|---|---|
| Alkyd G | 800.00 |
| n-Butylamine | 0.91 |
| Xylylene diamine | 2.40 |
| Tridecanol/ TDI adduct | 14.50 |

Alkyd G was charged to a reaction vessel. The temperature was adjusted to 25°C. Butylamine was added and stirred for 15 minutes. Xylylene diamine was then added and stirred for a further 15 minutes, after which time, the isocyanate adduct was added. The mixture was stirred for a further 30 minutes before discharge. 24 hours after manufacture the product had developed a medium degree of thixotropy, such that the material would still flow. The product was characterised by 90% solid contents and a viscosity of 0.92 Pa.s.

### EXAMPLE 17

| Composition (% by weight) | |
|---|---|
| Thixalkyd C | 192.96 |
| Methyl Ethyl Ketoxime | 0.87 |
| 12% Cobalt Octoate | 0.72 |
| 10% Calcium Manosec | 3.47 |
| 24% Zirconium Manosec | 1.09 |
| Isane IP 175 | 21.91 |
| Propylene glycol | 3.47 |

| Properties | |
|---|---|
| Viscosity (at 10,000 s⁻¹) | 0.27 Pa.s |
| Total Solids | 78.7% |
| VOC | 206.7 g/l |

The thixotropic alkyd and Isane 175 were dispersed at high speed. The driers and methyl ethyl ketoxime were then added and dispersed. Finally the propylene glycol was incorporated with minimal stirring.

## Claims

1. A thixotropic coating composition comprising and air-drying alkyd resin or modified alkyd resin as binder component, a volatile organic solvent component in which the said alkyd resin or modified alkyd resin is dissolved and present in an amount of not more than 250 grams/litre of the total composition, thixotropy is imparted to the composition by the presence of a polyurea material prepared by reacting one or more (poly)amines with one or more (poly)isocyanates in the presence of at least a portion of the alkyd or modified alkyd binder resin, wherein the alkyd or modified alkyd resin is derived from at least 70% by weight of long-chain fatty acid.

2. A thixotropic coating composition according to claim 1, wherein the air-drying alkyd resin is diluted in a non-reactive diluent selected from aliphatic hydrocarbons, cycloparaffins and aromatic hydrocarbons or in a reactive diluent selected from (meth)acrylates and fatty acid esters of polyhydric alcohols.

3. A thixotropic coating composition according to claim 1 or claim 2, wherein the acid value of the air-drying alkyd resin or modified alkyd resin is selected between 3 and 10 mg KOH/g.

4. A thixotropic coating composition according to any of claims 1 to 3, wherein the weight average molecular weight of the air-drying alkyd resin or modified alkyd resin is at least 120 000.

5. A thixotropic coating composition according to any of claims 1 to 4, wherein the viscosity of the air-drying alkyd resin or modified alkyd resin at 100% solids is from 0.1 to 5 Pa.s at a shear rate of 2500 s⁻¹.

6. A thixotropic coating composition according to any of claims 1 to 5, wherein the air-drying alkyd resin or modified alkyd resin is present in a proportion of 70 to 98 % by weight of the composition.

7. A thixotropic coating composition according to any of claims 1 to 6, wherein the polyurea material is a polyurea adduct obtained by reacting (a) a diisocyanate with (b) a primary and/or secondary polyamine and with (c) a monofunctional alcohol, said polyurea adduct comprising not more than 35% urethane and/or allophanate functions.

8. A thixotropic coating composition according to any of claims 1 to 7, further comprising a colorant component comprising one or more organic or inorganic pigments.

9. A thixotropic coating composition according to any of claims 1 to 8, further comprising one or more driers selected from organic solvent-soluble salts or soaps of metals.

10. A thixotropic coating composition according to any of claims 1 to 9, in the form of a thixotropic paint or varnish.
